# EUROPEAN PATENT APPLICATION

(11) **EP 1 959 650 A1**
(43) Date of publication of application: **20.08.2008**
(21) Application number: 06841784.9
(22) Date of filing: 16.11.2006
(51) Int. Cl.: H04M 1/725

(54) **SYSTEM FOR WIRELESSLY CONTROLLING DEVICES USING AN APPARATUS INCLUDING A MOBILE TELEPHONE**

(30) Priority: 01.12.2005 ES 200502971
(71) Applicant: Colaboradores en Tecnologia para la Empresa S.L., 46002 Valencia (ES)
(72) Inventor: MILLET SANCHO, José María, E-46002 Valencia (ES)
(74) Representative: Ungria Lopez, Javier
(86) International application number: PCT/ES2006/070177
(87) International publication number: WO 2007/063161

(57) **Abstract**

The invention relates to a system for wirelessly controlling devices using an apparatus including a mobile telephone. The inventive system is used to control the operation of a plurality of different types of devices (8a, 8b, 8c and 8d) which are connected to a controller (6) by means of an apparatus including a mobile telephone (1) which communicates with the controller (9) by means of short-range radio frequency communication means (13, 28). According to the invention, the operation of the aforementioned devices (8a, 8b, 8c and 8d) is controlled using a single communication module (28) which is included in the controller (6). The invention includes an access server and data log (10) in which the different operations performed with the system are stored and from which either the mobile telephone apparatus (1) or the controller (6) request authorization in order to perform the desired operation on the device. The devices can be controlled using the user's voice from the mobile telephone apparatus (1).

## Description

### OBJECT OF THE INVENTION

The object of the present invention is to permit control over a plurality of different types of devices. So, the invention is intended to permit control over any kind of device that is actuated by means of relays, as is the case of switching on and off of domestic appliances, alarms, irrigation systems, lights, the open and closing of doors, etc. It also permits control over devices with adjustable positioning, such as cranes, cameras and similar; and control of devices for reading of parameters such as electricity and gas meters, etc., or of any device carrying out the measurement of a parameter.

Another object of the invention is to permit these devices to be controlled by voice. It also allows spoken messages to be emitted indicating the different actions to be performed on the devices, and indicating the different data that are introduced into the apparatus, in order to facilitate their handling by people with visual impairment.

Finally, the invention has the object of requesting authorization for access, in order to permit the apparatus to control the functioning of the device that is desired, such that if no authorization is obtained then the control of the device is not permitted.

### BACKGROUND OF THE INVENTION

The use of mobile telephones as a remote control device is known in the state of the art, as described for example in Spanish patent with application number P-200400851, which discloses a method for use of a mobile telephone as a remote control, such that the mobile telephone controls the functioning of a device.

In this document, each device is connected to a receiver which communicates with the mobile telephone, and therefore each device to be controlled has to be connected to a receiver in order to permit communication with the mobile telephone, which constitutes a drawback when it is wished to control a plurality of devices by means of mobile telephone.

To achieve this, the invention incorporates a controller that is connected to a plurality of devices of a different kind in order to carry out their control.

The cited document also does not permit control of the device to be carried out by means of the user's voice.

It can also be mentioned that said document makes no provision for having to request prior authorization in order to carry out control over a device by means of a mobile telephone, which would allow for greater security of the system.

### DESCRIPTION OF THE INVENTION

In order to resolve and achieve the objectives stated above, the invention has developed a new system for wirelessly controlling devices using an apparatus including a mobile telephone for which, as with systems provided for In the state of the art, the mobile telephone includes a remote communication radio frequency module via at least one communications network, a radio frequency module for short-range communication with the devices, and means of storage of the commands indicating the actions to be performed by the devices for sending a command together with an identification of the mobile telephone apparatus, and acting on the devices according to the action indicated by the command; and is characterized in that it includes one or more controllers, each one of which is connected to a plurality of devices, with each controller including a radio frequency module for short-range communication with the mobile telephone apparatus in order to permit commands to be received from these latter, and to send a reply to a command received. This configuration has the great advantage that a single short-range communication means permits control over a plurality of devices, thereby avoiding, as occurs in the state of the art, each device having to be connected with a radio frequency module, which constitutes a major saving.

The commands indicating the actions to be performed by the devices are associated with an identification key of a controller; and the mobile telephone apparatus include a commands manager that is connected to a commands interpreter, so as to permit a user to select a command and send it to the controller, and so as to receive and extract information relating to a reply to the command that was previously sent.

The controller is provided with a commands extractor module which receives the different commands and extracts the Identification key of the controller and sends it to the identification key comparator for the controller, which compares the received key with a key previously stored in a memory, and if the two keys match it accepts the command and if not it rejects it. Moreover, the controller is provided with a commands interpreter module that is connected to data storage means that is associated with each command so as to obtain the action to be performed by a device connected to the controller.

Moreover, the commands interpreter module is connected to a relays manager which is in turn connected to a plurality of relays, each one connected to a device controllable by the action of the relay, such that by means of the invention and starting from a single controller it is possible to control different devices such as might be the opening and closing of doors, blinds, switching on and off of domestic appliances, etc.

It can be stated that the action to be performed on the relays can be any one possible among those known in the state of the art, such as activating, deactivating, pulse, uninterrupted pulses, activating certain relays with a particular sequence, etc.

The commands interpreter module is also connected to a gradual adjuster which is in turn connected to a plurality of adjustable positioning devices for their control. This configuration has the great advantage that, by means of a single controller, the invention permits control over a plurality of devices whose position is adjustable, such as might be cranes, cameras or similar.

The action that can be performed by the gradual adjuster can be any of those possible with devices that admit adjustment, such as increasing intensity, moving upwards, to the left, etc.

The commands interpreter module is furthermore connected to a parameters reader which is in turn connected to a plurality of parameter measurement devices for sending the reading made of a parameter to the mobile telephone apparatus which previously sent a command to read a parameter in a device. This configuration has the great advantage that a single controller can be used to take a reading of a plurality of parameters measurement apparatus, such as might be electricity, water, gas meters, etc.

Provision has be been made for the commands interpreter module also to be connected to a serial port to which a plurality of devices is connected, such as might be devices of the console type or any other which is required to be controlled via a serial port.

The mobile telephone apparatus Is provided with a parameters reading manager which is connected to the commands interpreter so as to display a required parameter on screen by means of sending the corresponding command.

Both the control signal for the relays and the parameters read, and the signals applicable to the adjustable positioning devices, can be analog or digital signals.

The system is provided with at least one access server and data log including means of connection with at least one communications network to which is connected the remote communication radio frequency module of the mobile telephone apparatus in order to permit communication of the server with that apparatus and with the controllers. The access server and data log include means of storage of information selected from among information on each device connected to each controller, information on the identification key of each controller, information on accesses permitted to each mobile telephone apparatus on each device connected to each controller, information logged referring to the actions and replies corresponding to the commands sent and combination of them. Moreover, the parameters reading manager for the mobile telephone apparatus is connected to the short-range radio frequency communication so that, when it receives a measured parameter, it sends it to the access server and data log in which it is stored.

So, by means of the described configuration, it is permitted to store in the access server and data log the different actions performed in the system, along with the readings of parameters read, in such a way that the reading of meters is controlled in a centralized manner.

The mobile telephone apparatus is provided with a voice recognition module which is connected to a microphone and to the commands manager for introducing data, selecting and sending commands and acting as a consequence on the devices by means of voice. Moreover, the commands manager is connected to a loudspeaker of the mobile telephone apparatus in order to emit words referring to the commands as these are selected by the user and emit words referring to data as this is introduced by the user.

The commands indicating actions to be performed by the devices, which are stored in the storage means of a mobile telephone apparatus, are associated with an authorization request for sending the command, for which, when a user selects the sending of a command that includes an authorization request, before the command is sent, the access server and data log are sent an authorization request for access of the mobile telephone apparatus to the device associated with the command, in such a way that the server then checks whether the access is permitted. If so, it sends an authorization to the mobile telephone apparatus, such that, when the latter receives the authorization it in turn sends the command to the controller. In the event that the server checks that the action to be performed on the device is not permitted to the mobile telephone apparatus requesting the authorization, then it sends an access denied instruction preventing the command from being sent to the controller.

In an embodiment of the invention provision is made for the authorization request for access to include a petition for the identification key of the controller to which the device on which it is wished to act is connected, so that in this case the server sends the identification key of the controller together with the authorization, in such a way that the command is sent together with the received identification key of the controller.

The data stored in the storage means of the controller is associated with an authorization request for action by the mobile telephone apparatus on a device connected to the controller, so that when the controller receives a command that is associated with an authorization request, it is the controller that sends the access server and data log the access request from the mobile telephone apparatus to the device associated with the command. In this case the server sends the authorization to the controller, such that the latter executes the required action and, in the event that the access authorization is denied, it sends the mobile telephone apparatus a signal indicating that the access has been denied.

Each authorization request for action remains stored in the access server and data log, as are all incidents taking place in the system.

The invention provides that the user is requested for a user key in order to carry out one or more of the system's functions, for which the commands interpreter of a mobile telephone apparatus is connected to a user key comparator, connected in turn to a storage memory for a previously introduced user key.

So, the commands manager of the mobile telephone apparatus includes means for performing an operation selected from between adding, modifying, deleting, ordering and sending commands and combinations of them, all this following a check of the user key introduced by means of a keypad or the voice recognition module.

The commands manager of the mobile telephone apparatus requests the introduction of the user key so that it can be verified prior to sending a command in such a way that, if the key is correct, the subsequent sending of the command is permitted.

Each command is associated with information selected from between an identifying name of the command, a code indicating the action to perform on a device, an indication of user key request, identifier of an access server and data log, and combination of these, in order to be able to perform the functions for which the system was designed.

In an embodiment of the system, provision is made for the code associated with the command to be able to include an identification key of a controller to which a command is sent, in such a way that in this case the identification key of the controller is obtained directly starting from the selection of the command, without any need to have to request this of the access server and data log.

The device provides that the access server and data log can include means for modifying the accesses permitted for each mobile telephone apparatus on each device and means for permitting consultation of the different information stored therein from any equipment that is connected to at least the network to which the access server with data log is connected with the mobile telephone apparatus and with the controllers, thus obtaining great versatility in the system.

The invention provides for a variant in which a command is associated with a request to the user to introduce an access key to a controller to which it is required to send a command, so that, once that access key has been introduced, it can be sent along with an authorization request of the type that includes a petition for the identification key of the controller, in such a way that the access server and data log verify the access key and send that authorization together with the identification key of the controller along with the authorization, when access is permitted.

The system allows the fact that, via the communications network to which the controller is connected, the latter can receive commands from other equipment connected to said communications network.

It can be pointed out that each one of the commands is associated with the performance of an action on one or several devices, and the possibility also exists that the command is associated with a plurality of actions to be performed on different devices, on a single device or both possibilities.

The invention also provides for the access server and data log to be able to include short-range radio frequency communication means for communicating with a controller when the two are separated by a short distance.

Finally, the system provides for being able to incorporate a control centre that is connected to at least the communications network to which the access server and data log are connected, in order to permit the server to be managed from the control centre.

Below, in order to facilitate a better understanding of this specification and forming an integral part thereof, a series of figures are attached in which, on an illustrative rather than limiting basis, the object of the invention have been represented.

### BRIEF DESCRIPTION OF THE FIGURE

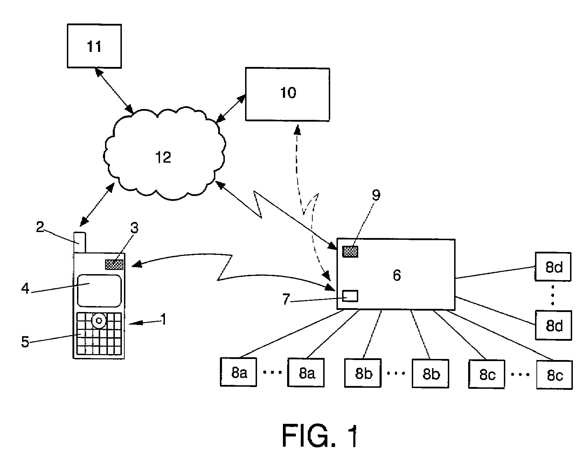

**Figure 1****.-** Shows a schematic diagram of the system of the invention.
**Figure 2****.-** Shows a functional block diagram of the configuration of a mobile telephone apparatus.

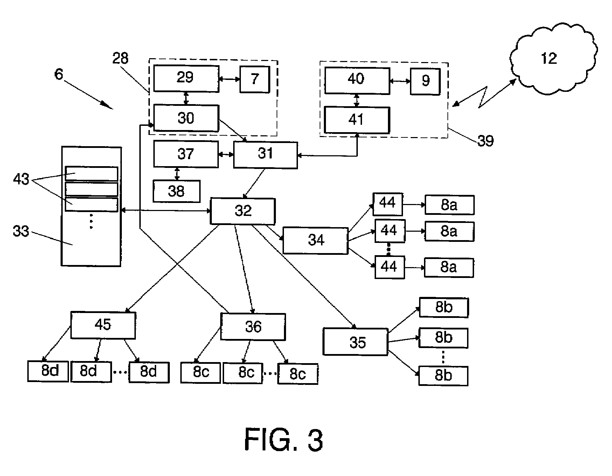

**Figure 3****.-** Shows a functional block diagram of the configuration of the controller to which a plurality of different kinds of devices are connected for being controlled from the mobile telephone apparatus in the previous figure.

### DESCRIPTION OF THE PREFERRED FORM OF EMBODIMENT

Given below is a description of the invention based on the figures mentioned above.

The invention is provided for permitting control over the functioning of a plurality of devices 8a, 8b, 8c and 8d from a mobile telephone apparatus 1.

In the example of embodiment of the invention, the mobile telephone apparatus 1 is materialized by means of a mobile telephone 1, though it could just as well be an electronic agenda or any other apparatus.

For this, the invention uses communication means that are conventionally used in mobile telephones 1, for which It includes an antenna 2 used for long-range voice and data communications using a network 12, such as for example a communications network of telecommunications operators of the type GPRS, SMS, MMS, etc.

Moreover, the mobile telephone 1 is provided with an antenna 3 for short-range communication, with the corresponding screen 4 and keypad 5.

By means of the antenna 3 short-range communication is carried out from the mobile telephone 1 with a controller 6 to which are connected the plurality of devices 8a, 8b, 8c and 8d for being controlled. In the example of embodiment, a single controller 6 has been drawn in order to simplify the explanation of the functioning, though it can be pointed out that it can be connected to a plurality of controllers 6, which are in turn connected to a plurality of devices 8a, 8b, 8c and 8d for controlling from a mobile telephone 1.

In addition, the controller 6 includes an antenna 9 for communications with the network 12, to which is connected an access server and data log 10 and to which a control centre 11 can also be connected.

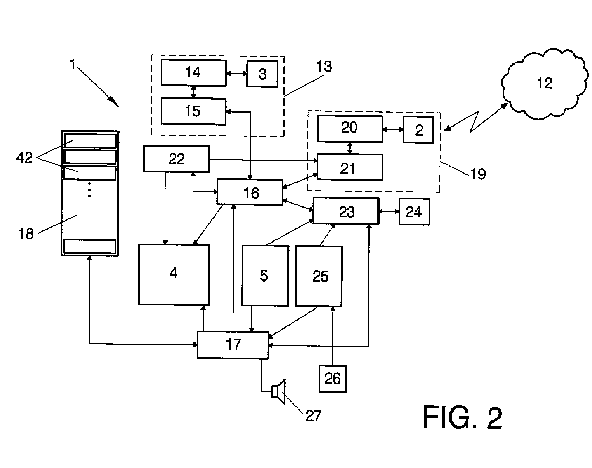

Described below is the novel configuration of the mobile telephone 1 of the invention with the aid of figure 2, which includes a commands manager 17 which is connected to a commands interpreter 16 by means of which the connection is made to the conventional antennas 2 and 3. The antenna 3 forms part of a conventional short-range radio frequency communications module 13 which includes the corresponding network frequency emitter/receiver 14 and decoder/coder 15. Equally, the antenna 2 forms part of a long-range radio frequency communications module 19 which incorporates the corresponding emitter/receiver 20 and decoder/coder 21.

The short-range radio frequency communications module 13 uses a free use radio frequency technology, In other words, without using any operator and without any need for a license, as with the short-range radio frequency communications module 28 of the controller.

The long-range radio frequency communications modules 19 and 39 use the network of an operator, though the possibility also exists that the technology is of the type that does not require any operator, in other words, free use technology.

The use of the network of an operator has the advantage of permitting access to remote servers 10, being able for example to provide access to them via the Internet. The drawback of this option is that each communication entails a communication cost.

Moreover, the commands manager 17 is connected to a memory 18 in which a plurality of commands 42 is stored indicating the actions to be performed on each of the devices, 8a, 8b, 8c and 8d.

The commands manager 17 is also connected to the voice recognition module 25 which is connected to the corresponding microphone 26 in order to permit control over the functioning of the mobile telephone by means of voice. Provision is also made for the commands manager 17 to be connected to a loudspeaker 27 for emitting spoken messages on the different data displayed on the screen 4, in order to facilitate handling by persons with visual impairment.

The mobile telephone 1 includes a user key comparator 23 which is connected to a memory 24 in which the user key is stored, in order to request the introduction of the user key (personal identification number) when the system requires it and as is going to be described further below.

Regarding the controller 6, it includes a commands interpreter module 32 which is connected to a commands extractor module 31 by means of which the connection is made from the controller 6 to the antennas 7 and 9, for which the antenna 7 forms part of a short-range radio frequency communications module 28 which incorporates the corresponding emitter/receiver 29 and decoder/coder 30 by means of which the connection is made to the commands extractor module 31.

In addition, the antenna 9 forms part of a long-range communications module 39 which incorporates the corresponding emitter/receiver 40 and decoder/coder 41, by means of which the connection is made to the commands extractor module 31.

The long-range radio frequency communications module 39 can be radio frequency or connection by cable.

Moreover, the commands interpreter module 32 is connected to a memory 33 for storage of data 43, to a relays manager 34, to a gradual adjuster 35, to a parameters reader 36 and to a serial port 45.

The relays manager 34 is connected to a plurality of relays 44, each of which is connected to a device 8, of the type whose functioning can be controlled with a relay 44, such as for example the switching on and off of a domestic appliance, a device for opening of doors, blinds, etc., or similar, which can be controlled by means of activation, deactivation, pulse, uninterrupted pulses, activating certain relays, etc.

The gradual adjuster 35 constitutes the means of connection of the controller 6 to a plurality of devices 8b defined by those types of device that admit adjustment such as increasing intensity, moving upwards, moving to the left, etc., as in the case of cranes, cameras, etc.

Regarding the parameters reader 36, it constitutes the means of connection of the controller 6 with a plurality of devices 8c for measurement of parameters, such as gas, electricity, water meters, etc.

The serial port 45 permits connection to a plurality of devices 8d, such as might be console type devices for controlling their functioning.

It can also be stated that the controller 6 is provided with a key comparator 37 of the controller 6, which is connected to a memory 38 in which the key of the comparator 6 has previously been introduced.

The commands 42 stored in the memory 19 of the mobile telephone 1 are associated with the name that identifies the command, which is defined by the user and has an merely informative nature, such as might be for example door, garage, electricity, balcony, etc., and they are also associated with a code consisting of an alphanumeric series indicating the action to perform on a device 8a, 8b, 8c and 8d. An identification key of the controller 6 can optionally be included. The commands 42 are also associated with the identification of the mobile telephone in command to know who is sending a command.

Moreover, each command 43 is optionally associated with the request for a user key, and with an identifier of the access server and data log 10, this identifier having of course to be unique.

In this way, by means of the keypad 5, the user can scroll through the different commands 42 stored in the memory 18 which are displayed on the screen 4 by means of the commands manager 17, so that the user can select the command that he or she wishes to send so as to carry out control over one of the devices 8a, 8b, 8c or 8d. At this point it can be stated that, as already mentioned, the selection of the command can also be done by means of voice via the microphone 26 and the voice recognition module 25, and the user can also express himself by means of signals spoken by the loudspeaker 27 for the different commands 42 that are displayed on the screen 4 in order to permit selection to be carried out of one of them via the keypad 5 or by the user's voice.

The system of the invention provides for the user to be able to delete, modify, command, create and send commands by means of the keypad 5 or by voice, with the prior introduction of the user key, for which, when the user selects one of these actions, which are associated with a request to introduce a user key, the commands manager delivers the action to be performed to the commands interpreter 16 which requests the introduction of the user key which, once introduced, is sent to the user key comparator 23 which compares the introduced key with the one stored in the memory 24, so that if the two match each other, it permits the selected action to be performed, and if not then it denies the action to be performed.

When a user selects a command for sending to a device 8a, 8b, 8c and 8d, the commands manager 17 detects it and passes it on to the commands interpreter 16 for sending the command to the controller 6 via the short-range radio frequency communications module 13, such that said command is received by means of the short-range radio frequency communications module 7 of the controller 6.

The commands interpreter module 16 detects the action which is asked of the controller (activate, deactivate, etc.).

In the event that the command is associated with the request to introduce the user key, before the commands interpreter 16 of the mobile phone sends a command, it requests the introduction of the user key, and If the introduced key is not correct, it denies the operation and if the key is correct it performs the sending of the command in the manner already described.

The decoder/coder 30 of the communications module 28 delivers the command to the commands extractor module 31, which extracts the identification key of the controller and delivers it to the comparator 37 in order to compare the key stored in the memory 38 with the one received, so that in the event that the two keys match it delivers the command to the commands interpretation module 32, which detects the action to carry out and, by accessing the data 43 of the memory 33., it determines the device on which action has to be taken. In the opposite case, the command that is sent is denied and an access denied message is returned, via the short-range radio frequency communications module 28, which is received in the short-range radio frequency communications module 13 of the mobile telephone 1 and, by means of the commands interpreter 16, the screen displays the fact that the action to which the command made reference has been denied.

In the event that the identification key of the controller is correct, the commands interpreter module 32 detects the device on which the action has to be performed and, if it is device 8a, it sends it to the relays manager which selects the relay 44 governing the functioning of the corresponding device 8a in command to perform the required action. When the action refers to a device 8b, the commands interpretation module 32 acts on the gradual adjuster, on the basis of which the corresponding device 8b is controlled.

If the action refers to a reading action of a parameter of a device 8c, the commands interpretation module 32 acts on the parameters selector 36, which obtains the parameter corresponding to the stated device.

In this last case, in other words, when the command refers to a reading of a device 8c, the reading taken is sent by means of the short-range radio frequency communications module 28 to the mobile telephone 1 which receives it via its short-range radio frequency communications module 13 and delivers it to the commands interpreter 16 which, by means of the parameter reading manager 22, displays it on the screen 4. Simultaneously, the parameters reading manager 22 sends the obtained parameter to the long-range radio frequency communications module which is received via the communications network 12 in the access server and data log, wherein the different parameters that are read are stored. In this way, via the server 10 all the parameters that are read are stored.

Finally, when the command refers to a device 8d, the commands interpretation module 32 acts on the device 8d via the serial port.

The invention makes provision so that the command may not be associated with the identification key of the controller 6, in which case the command is associated with a request to the access server and data log 10 for an access authorization to the controller 6, this request being sent by means of the commands interpreter 16 and via the long-range radio frequency communications module 19 as far as the server 10 via the communications network 12. In this case, the server 10 checks whether the identification of the mobile telephone 1 sent together with the command 42 has access permitted to the controller 6, in which case the server 10 sends an authorization together with the identification key of the controller 6, for which the said server 10 has to store that key.

Along with the access request, the command to execute and the identification key of the controller is sent, in other words, an access authorization request can be asked for even though the command has an identification key of the controller associated with it.

The identification key of the controller 6, along with the authorization, is received by the mobile telephone 1 via Its long-range radio frequency communications module 19 and it delivers it to the commands interpreter in command to send the command together with the identification key of the controller 6 that has been obtained up to the controller 6, with the process already described being repeated.

The inventive system also makes provision so the identification key of the controller can be obtained with the prior introduction of an access key to the controller for which, in this case, the command is associated with the request to introduce an access key to the controller, which is sent to the server 10 according to the process already described, and a check is made in that server 10 of whether the access key corresponds to that for the controller, and if it does it sends the access authorization together with the identification key of the controller 6 in the manner that has already been described. For example, a command can be sent to open a door, and the mobile telephone requests a door number, which can be printed on that door, so that, after introducing that number, which corresponds to the access key of the controller, this number is then passed to the server and the system proceeds in the manner already described. This characteristic has the great advantage that a single command can be user to access different controllers.

It can be mentioned that the server 10 can modify the rights of access of the mobile telephones in real time and control the accesses or access attempts to doors from any connection to the communications network 12.

It can also be mentioned that the invention provides for the possibility that it is the controller 6 which requests access authorization of the mobile telephone from which it has received a command, in which case the commands interpreter module 32 detects, via the identification of the mobile telephone from which it receives the command, the need to generate an access authorization request from the mobile telephone to the controller, with a prior check that the identification key of the controller is correct, and it generates the access authorization request and sends it to the server 10 via the long-range radio frequency communications 39 and the communications network 12. The server 10 then carries out the check and if it is the authorized access it sends the authorization and, when the controller receives it, it executes the action stated in the command on the corresponding device, and if it is not, then it sends the access denied command both to the mobile telephone and to the controller via the communications network 12.

Obviously, in each piece of information which the controller 6 sends to the server 10, the identifier of the controller 6 is attached in order to know who sent the information.

The identification of the controller 1, along with the identification of the mobile telephone, are unique, and can, for example, be the MAC address.

The control centre 11 is provided for managing the access server and data log and for having all the information managed by the server 10 centralized, above all in the case that there are plans to incorporate more than one server 10.

It can be pointed out that the controller 6 can communicate with the server 10 via the short-range radio frequency communications 28, when the latter are close together, instead of using the long-range radio frequency communications 39.

## Claims

1. **System for wirelessly controlling devices using an apparatus Including a mobile telephone** in which the mobile telephone apparatus (1) includes a remote communication radio frequency module (19) via at least one communications network (12), a short-range radio frequency communication module (13) for communication with the devices (8a, 8b, 8c and 8d), and means of storage (18) of commands (42) indicating the actions to be performed by the devices (8a, 8b, 8c and 8d) for sending a command together with an identification of the mobile telephone apparatus (1), and acting on the devices (8a, 8b, 8c and 8d) according to the action indicated by the command; it is **characterized in that:**
- it includes at least one controller (6) which is connected to a plurality of devices (8a, 8b, 8c and 8d) and which includes a radio frequency module (28) for short-range communication with the mobile telephone apparatus (1) in order to permit commands to be received from these latter, and to send a reply to a command received;
- the commands (42) indicating the actions to be performed by the devices are associated with an identification key of a controller; the mobile telephone apparatus (1) including a commands manager (17) which is connected to a commands interpreter, in order to permit a user to select a command (42) and send it to the controller, and in order to receive and extract information relating to a reply to the command (42) previously sent;
- the controller (6) furthermore includes a commands extractor module (31) which receives the different commands (42) and extracts the identification key of the controller (6) and delivers it to the identification key comparator (37) for the controller (6), which compares the received key with a key previously stored in a memory (38), and in the event that the stored key matches the one received, It accepts the command (42) and if not it rejects it; and it includes a commands interpreter module (32) which detects the action to perform and which is connected to:
- storage means (33) for data (43) that is associated with each device and with each command to perform on them, so as determine the device (8a, 8b, 8c and 8d) to which the command (42) is being sent;
- and to a parameters reader (36) which is connected to a plurality of devices (8c) for measurement of parameters in order to send a reading taken of a parameter to the mobile telephone apparatus which sent a command (42) referring to the reading of a parameter; and furthermore the commands interpreter (32) is connected to at least:
- one relays manager (34) which is connected to a plurality of relays (44), each one connected to a device (8a) controllable by the action of relays (44) for its control;
- a gradual adjuster (35) which is connected to a plurality of adjustable positioning devices (8b) for their control;
- and to a serial port (45) which is connected to a plurality of devices (8d) controlled by means of the serial port (45)
- the mobile telephone apparatus including a parameters reading manager connected to the commands interpreter module (32) so as to display a required parameter on the screen (4) of the mobile telephone apparatus (1) which previously sent the command (42) to read a parameter on a parameters measurement device (8c).

2. **System for wirelessly controlling devices using an apparatus including a mobile telephone,** according to claim 1, **characterized in that** the mobile telephone apparatus (1) includes a voice recognition module (25) which is connected to a microphone (26) and to the commands manager (17) for introducing data and selecting and sending commands (42) and acting on the devices (8a, 8b, 8c and 8d), connected to the controller (6), by means of the user's voice; and **in that** the commands manager (17) Is connected to a loudspeaker (27) included in the mobile telephone apparatus (1) in order to emit words referring to commands (42) as these are selected by the user and emit words referring to data as this is introduced by the user.

3. **System for wirelessly controlling devices using an apparatus including a mobile telephone,** according to claims 1 or 2, **characterized in that** it includes at least one access server and data log (10) which includes means of connection to at least the communications network (12) to which is connected the remote communication radio frequency module (13) of the mobile telephone apparatus (1) in order to carry out communication with said mobile telephone apparatus (1) and with the controllers (6); and it includes storage means for information selected from among information on each device (8a, 8b, 8c and 8d) connected to a controller (6), information on the identification key of each controller, information on accesses permitted to each mobile telephone apparatus (1), on each device (8a, 8b, 8c and 8d) to each controller (6), information logged referring to the actions and replies corresponding to the commands (42) sent, and combination of them.

4. **System for wirelessly controlling devices using an apparatus including a mobile telephone,** according to claim 3, **characterized in that** the commands (42) indicating actions to be performed by the devices (8a, 8b, 8c and 8d), stored in the storage means (18) of a mobile telephone apparatus (1), are associated with an authorization request for sending the command (42), so that, when a user selects the sending of a command that includes an authorization request, the access server and data log (10) is sent an authorization request for access of the mobile telephone apparatus (1) to the device (8a, 8b, 8c and 8d) associated with the command (42), and so as, in the event of receiving the requested authorization, to send the command (42) to the controller (6) and if not to indicate that the access is denied.

5. **System for wirelessly controlling devices using an apparatus including a mobile telephone,** according to claim 4, **characterized in that** an authorization request for access includes a petition for the identification key of the controller (6) to which the device (8a, 8b, 8c and 8d) on which it is wished to act is connected, so that, when the mobile telephone apparatus (1) receives an authorization to send the command (42), it also receives the identification key of the controller (6) and attaches it to the command (42) in order to sent it to the controller (6).

6. **System for wirelessly controlling devices using an apparatus including a mobile telephone,** according to claim 3, **characterized in that** the parameters reading manger (22) of the mobile telephone apparatus (1) is connected to the short-range radio frequency communication means (13) in order to receive a measured parameter and send it to the access server and data log (10) where it is stored.

7. **System for wirelessly controlling devices using an apparatus including a mobile telephone,** according to claim 3, **characterized in that** the data (43) stored in the storage means (33) of the controller (6) is associated with an authorization request for action by the apparatus or mobile telephone (1) on a device (8a, 8b, 8c and 8d) connected to the controller (6), so that when a controller (6) receives a command that Is associated with an authorization request, the controller (6) sends the access server and the data log (10) a request from the mobile telephone apparatus (1) for access to the device (8a, 8b, 8c and 8d) associated with the command (42) and so as, in the event of receiving authorization, to carry out the required action and if not to send the mobile telephone apparatus (1) a signal indicating that the access has been denied.

8. **System for wirelessly controlling devices using an apparatus including a mobile telephone,** according to claims 4 or 7, **characterized in that** each authorization request for action and each action performed on a device (8a, 8b, 8c and 8d) is stored in the storage means of the access server and data log (10).

9. **System for wirelessly controlling devices using an apparatus including a mobile telephone,** according to the above claims, **characterized in that** the commands interpreter (16) of a mobile telephone apparatus (1) is connected to a user key comparator (23), which is in turn connected to a storage memory (24) for a previously introduced user key, in order to request the user to introduce the user key and check whether it matches the one that is stored.

10. **System for wirelessly controlling devices using an apparatus including a mobile telephone,** according to claim 9, **characterized in that** the commands manager of the mobile telephone apparatus (1) includes means for performing an operation selected from between adding, modifying, deleting, ordering and sending commands and combinations of them, with a prior check of the user key introduced by means of a keypad (5) or a voice recognition module (25).

11. **System for wirelessly controlling devices using an apparatus including a mobile telephone,** according to claim 9, **characterized in that** the commands manager (17) of a mobile telephone apparatus (1) requests the introduction of the user key for its verification prior to sending a command (42) so as to permit its later sending when the user access key is correct.

12. **System for wirelessly controlling devices using an apparatus including a mobile telephone,** according to claim 9, **characterized in that** each command (42) is associated with information selected from between an identifying name of the command, or a code indicating the action to perform on a device (8a, 8b, 8c and 8d), an indication of user key request, identifier of an access server and data log (10), and combination of these.

13. **System for wirelessly controlling devices using an apparatus including a mobile telephone,** according to claim 12, **characterized in that** the code for the command (42) includes an identification key of a controller (6) to which a command (42) is sent.

14. **System for wirelessly controlling devices using an apparatus including a mobile telephone,** according to claim 3, **characterized in that** the access server and data log (10) include means for modifying the accesses permitted for each mobile telephone apparatus (1) on each device (8a, 8b, 8c and 8d) and means for permitting consultation of the different information stored therein from any equipment that is connected to at least the network to which the access server with data log (10) is connected.

15. **System for wirelessly controlling devices using an apparatus including a mobile telephone,** according to claim 5, **characterized in that** a command (14) is associated with a request to the user to introduce an access key to a controller (6) to which it is required to send a command (42), so as, once it has been introduced, to send it along with an authorization request, said request including a petition for the identification key of the controller (6), the access key of which is attached, in order, once the access server and data log (10) have checked the access key, to receive the identification key of the controller (6) along with the authorization to send the command.

16. **System for wirelessly controlling devices using an apparatus including a mobile telephone,** according to claim 1, **characterized in that** a command (42) is associated with a request to the user to introduce an identification key of the controller (6) to which the command (42) is going to be sent, in order to send it to the controller (1) along with the command.

17. **SYSTEM FOR WIRELESSLY CONTROLLING DEVICES USING AN APPARATUS INCLUDING A MOBILE TELEPHONE,** according to claim 1, **characterized in that,** via the communications network (12) to which the controller (6) is connected, the latter can receive commands from other equipment connected to said communications network (12).

18. **System for wirelessly controlling devices using an apparatus including a mobile telephone,** according to claim 1, **characterized in that** the signal provided for the relays manager (34), for the gradual adjuster (35) and for the parameters reader (36) is selected from between an analog signal and a digital signal.

19. **System for wirelessly controlling devices using an apparatus including a mobile telephone,** according to the above claims, **characterized in that** an action is associated with one or several devices; and a command (42) is selectively associated with a plurality of actions to be performed on different devices, on a single device or on a combination of them.

20. **System for wirelessly controlling devices using an apparatus including a mobile telephone,** according to the above claims, **characterized in that** the access server and data log (10) includes short-range radio frequency communication means for communicating with the controller (6) when the two are separated by a short distance.

21. **System for wirelessly controlling devices using an apparatus including a mobile telephone,** according to the above claims, **characterized in that** it includes a control centre (11) connected to the communications network (12) to which the access server and data log (10) are connected, in order to permit the server to be managed from the control centre.
